# FASCICULE DE BREVET EUROPEEN

(11) **EP 3 060 063 B1**
(45) Date de publication et mention de la délivrance du brevet: **22.08.2018**
(21) Numéro de dépôt: 14805971.0
(22) Date de dépôt: 21.10.2014
(51) Int. Cl.: A23C 9/12, A47J 27/00

(54) **APPAREIL POUR LA REALISATION DE PREPARATIONS FERMENTEES A BASE DE LAIT, NOTAMMENT DE PREPARATIONS LIQUIDES**
VORRICHTUNG ZUR HERSTELLUNG FERMENTIERTER ZUBEREITUNGEN AUF MILCHBASIS, INSBESONDERE FLÜSSIGE ZUBEREITUNGEN
APPARATUS FOR PRODUCING FERMENTED MILK-BASED PREPARATIONS, IN PARTICULAR LIQUID PREPARATIONS

(30) Priorité: 24.10.2013 FR 1360404
(43) Date de publication de la demande: 31.08.2016
(73) Titulaire: SEB S.A., 69130 Ecully (FR)
(72) Inventeur: FERRER, Florent, F-74600 Seynod (FR); LARGUEZE, Mathieu, F-65000 Tarbes (FR); BLOND, Laurent, F-21200 Beaune (FR); SICARD, Mariette, F-21260 Veronnes (FR)
(74) Mandataire: Bourrières, Patrice
(86) Numéro de dépôt international: PCT/FR2014/052676
(87) Numéro de publication internationale: WO 2015/059403

(56) Documents cités:
- EP-A2- 2 442 626
- CN-U- 202 197 754
- CN-U- 202 619 396
- FR-A1- 2 439 552
- US-A1- 2009 280 214

## Description

La présente invention concerne le domaine technique de la fabrication de préparations fermentées à base de lait.

La présente invention concerne plus particulièrement, mais non exclusivement, la fabrication de préparations fermentées à base de lait dans un appareil électrique domestique.

La présente invention concerne notamment, mais non exclusivement, la fabrication de préparations fermentées liquides à base de lait telles que les laits fermentés et les yaourts à boire.

Les préparations fermentées à base de lait telles que les yaourts, les yaourts liquides ou l'Ayran mettent en oeuvre des fermentations dans une plage de température comprise entre 40°C et 50°C, idéalement autour de 43°C à 45°C.

D'autres préparations fermentées liquides à base de lait mettent en oeuvre des fermentations dans une plage de température plus basse, par exemple comprise entre 20 et 30°C pour le Kefir ou le Leben.

Il est connu du document CN2643666U un appareil pour la réalisation de préparations fermentées à base de lait, comprenant un boîtier à double paroi présentant une ouverture supérieure, une cuve agencée dans le boîtier, un couvercle intérieur disposé sur la cuve, un couvercle extérieur disposé sur le boîtier. Un fil chauffant est bobiné autour de la paroi intérieure du boîtier. Le fil chauffant est recouvert par une membrane d'isolation. Un tel appareil présente une construction simple. Toutefois ce document ne divulgue pas de dispositif de contrôle de la température. Une telle construction est peu adaptée à la réalisation de préparations fermentées présentant une température de fermentation proche de la température ambiante. Une telle construction rend difficile une réalisation correcte de préparations fermentées présentant différentes plages de températures de fermentation. Une telle construction rend difficile une réalisation correcte de préparations fermentées dans une plage étendue de températures ambiantes. Les documents CN202197754U et CN202619396U décrivent des appareils pour la réalisation de préparations fermentées à base de lait, tel que du lait de soja. Un objet de la présente invention est de proposer un appareil pour la réalisation de préparations fermentées à base de lait, qui présente une construction simple et une utilisation facile, et qui permette d'obtenir des préparations de qualité satisfaisante.

Un autre objet de la présente invention est de proposer un appareil pour la réalisation de préparations fermentées à base de lait, qui soit bien adapté à la réalisation de préparations fermentées mettant en oeuvre des fermentations intervenant dans une plage de température plus basse que la plage de température usuelle pour la réalisation de yaourt.

Un autre objet de la présente invention est de proposer un appareil pour la réalisation de préparations fermentées à base de lait, qui soit adapté à la réalisation de plusieurs types de préparations fermentées mettant en oeuvre des fermentations intervenant dans différentes plages de températures.

Un autre objet de la présente invention est de proposer un appareil pour la réalisation de préparations fermentées à base de lait, qui soit bien adapté pour un fonctionnement dans une gamme étendue de températures ambiantes.

Ces objets sont atteints avec un appareil pour la réalisation de préparations fermentées à base de lait, notamment de préparations fermentées liquides, comportant un boîtier principal définissant une cavité présentant une ouverture supérieure, une cuve amovible insérée au moins partiellement dans la cavité, un couvercle intérieur associé à la cuve, un couvercle principal associé au boîtier principal, le boîtier principal présentant une enveloppe externe et une paroi interne définissant une chambre intérieure logeant un dispositif de chauffe comprenant des moyens de chauffe latéraux portés par la paroi interne et entourant la cavité, du fait que le dispositif de chauffe comprend des moyens de chauffe inférieurs distincts des moyens de chauffe latéraux, les moyens de chauffe inférieurs étant disposés sous le fond de la cavité, et que l'appareil comporte un dispositif de commande comprenant un capteur de température agencé en dessous du fond de la cuve et à distance des moyens de chauffe inférieurs, pour piloter le fonctionnement du dispositif de chauffe. Le chauffage de la cuve par le fond associé au chauffage de la cuve par les parois latérales permet de limiter les gradients de température dans la préparation. Ces dispositions favorisent la réalisation d'un contrôle de température précis et homogène. L'utilisation de moyens de chauffe inférieurs distincts des moyens de chauffe latéraux permet de simplifier la mise au point de l'appareil en facilitant l'ajustement des puissances fournies au fond de la cuve et à la paroi latérale de la cuve pour obtenir une chauffe bien homogène. En d'autres termes, la chauffe du fond de la cuve n'est pas obtenue par un dispositif de diffusion de chaleur associé à des seuls moyens de chauffe latéraux, et la chauffe de la paroi latérale de la cuve n'est pas obtenue par un dispositif de diffusion de chaleur associé à des seuls moyens de chauffe inférieurs. Le capteur de température agencé à distance des moyens de chauffe inférieurs permet de piloter une régulation de la température ambiante à l'intérieur de la chambre intérieure et/ou de la cavité logeant la cuve. Si désiré, le dispositif de chauffe peut comporter au moins un autre capteur de température pour limiter réchauffement des moyens de chauffe inférieurs et/ou des moyens de chauffe latéraux. Ces dispositions peuvent être mises en oeuvre pour obtenir un appareil permettant de réaliser de manière satisfaisante des préparations fermentées, notamment des préparations fermentées à une température proche de la température ambiante et/ou différents types de préparations fermentées à différents niveaux de température. De plus la construction d'un tel appareil reste simple et son utilisation est aisée.

Avantageusement alors, la puissance des moyens de chauffe inférieurs rapportée à la surface inférieure du fond de la paroi interne est supérieure à la puissance des moyens de chauffe latéraux rapportée à la surface latérale externe de la paroi interne entourée par les moyens de chauffe latéraux, et de préférence au moins deux fois supérieure à la puissance des moyens de chauffe latéraux rapportée à ladite surface latérale externe. Cette disposition permet de chauffer principalement la cuve à partir du fond, ce qui contribue à l'homogénéité de la chauffe.

Avantageusement encore, la puissance des moyens de chauffe latéraux est supérieure à la puissance des moyens de chauffe inférieurs, et de manière préférée au moins 1,5 fois supérieure à la puissance des moyens de chauffe inférieurs. Cette disposition permet d'utiliser une cuve de forme élancée, notamment une cuve plus haute que large, tout en obtenant une bonne homogénéité de chauffe.

Selon un mode de réalisation préféré, le fond de la cuve repose sur le fond de la cavité. Cette disposition permet d'obtenir un bon transfert thermique entre les moyens de chauffe inférieurs et la cuve, qui facilite l'obtention d'une régulation de température précise.

Avantageusement encore, le capteur de température est en contact avec le fond de la cuve. Cette disposition permet de réaliser un pilotage précis de la chauffe, pour éviter de surchauffer la préparation.

Avantageusement alors, le capteur de température est monté mobile contre un élément de rappel élastique. Cette disposition facilite l'obtention d'une régulation de température précise.

Avantageusement, le capteur de température traverse la paroi interne et un joint d'étanchéité est monté entre le capteur de température et la paroi interne. Cette disposition permet d'éviter d'endommager l'appareil en cas d'utilisation sans cuve.

Avantageusement encore, les moyens de chauffe latéraux sont formés par des moyens de chauffe latéraux surfaciques. Cette disposition permet une meilleure homogénéité de chauffe de la paroi latérale de la cuve.

Selon un mode de réalisation avantageux, les moyens de chauffe latéraux comprennent au moins un fil chauffant latéral enroulé en spirale autour de la paroi interne. Cette construction est peu onéreuse et permet d'obtenir de manière simple un chauffage de la surface latérale de la paroi interne de la cavité recevant la cuve. En alternative, des moyens de chauffe latéraux comprenant des pistes résistives sérigraphiées pourraient être utilisées, notamment sous la forme d'au moins un autocollant chauffant présentant de telles pistes résistives, apposé à l'extérieur de la paroi interne.

Avantageusement encore, les moyens de chauffe latéraux comprennent une membrane de diffusion de chaleur disposée autour de la paroi interne. Cette disposition permet de favoriser une répartition de température bien homogène autour de la paroi interne de la cavité.

Avantageusement alors, la membrane de diffusion de chaleur est agencée entre la paroi interne et le fil chauffant latéral. Cette disposition permet de limiter les niveaux de température de la paroi interne, ce qui favorise l'utilisation de matières plastiques peu onéreuses telles que le PP (Polypropylène). Cette disposition permet également de favoriser le chauffage de la cavité au détriment du chauffage de la chambre intérieure du boîtier principal, ce qui améliore le rendement de la chauffe et contribue à un pilotage plus précis de la chauffe.

Avantageusement alors les moyens de chauffe latéraux comprennent une autre membrane de diffusion de chaleur disposée autour de la membrane de diffusion de chaleur, le fil chauffant latéral étant disposé entre la membrane de diffusion de chaleur et l'autre membrane de diffusion de chaleur. Cette disposition contribue également au chauffage de la cavité au détriment du chauffage de la chambre intérieure du boîtier principal.

Selon une forme de réalisation, les moyens de chauffe inférieurs comprennent au moins un fil chauffant inférieur porté par la paroi interne. Cette construction est peu onéreuse et permet d'obtenir de manière simple un chauffage du fond de la paroi interne de la cavité recevant la cuve.

Avantageusement alors, la paroi interne présente des nervures inférieures entre lesquelles est monté le fil chauffant inférieur. Cette disposition permet de simplifier la construction de l'appareil.

Avantageusement encore, le fil chauffant inférieur est monté en zigzag sous la paroi interne. Cette disposition est simple à réaliser et contribue à l'obtention d'un chauffage homogène du fond de la paroi interne de la cavité recevant la cuve.

Avantageusement encore, la cuve présente une partie supérieure évasée et le couvercle intérieur est engagé à l'intérieur de la partie supérieure évasée. Cette disposition permet de favoriser un bon confinement de l'enceinte contenant la préparation, pour éviter les déperditions de chaleur et obtenir une chauffe plus homogène.

Selon une forme de réalisation avantageuse, le dispositif de commande comporte un panneau de commande pour sélectionner un mode de chauffe parmi au moins deux modes de chauffe. Les modes de chauffe peuvent notamment différer par la température de régulation préprogrammée et/ou par la durée de chauffe préprogrammée.

Selon une construction avantageuse, le boîtier principal comporte un corps extérieur tubulaire reposant sur une base et portant un corps intérieur définissant la paroi interne. Cette disposition permet de simplifier la construction de l'appareil.

Avantageusement alors, le panneau de commande est porté par le corps extérieur tubulaire. Cette disposition permet de simplifier la construction de l'appareil.

Avantageusement encore, le dispositif de commande comporte un circuit de commande porté par la paroi interne. Cette disposition permet de simplifier la construction de l'appareil.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil selon l'invention,
- la figure 2 est une vue de dessus du boîtier principal de l'appareil illustré sur la figure 1,
- la figure 3 est une vue agrandie d'une partie de la figure 2,
- la figure 4 est une vue en élévation et en coupe de l'appareil illustré sur la figure 1,
- la figure 5 est une vue en perspective et en éclaté du boîtier principal de l'appareil illustré sur les figures 1 et 4,
- la figure 6 est une vue de dessous du boîtier principal de l'appareil illustré sur la figure 1, dans laquelle la base du boîtier principal a été retirée,
- la figure 7 est une vue de dessous de la paroi interne du boîtier principal de l'appareil illustré sur la figure 1, la base et l'enveloppe externe du boîtier principal ayant été retirées,
- la figure 8 est une vue en perspective de l'appareil illustré sur les figures 1 et 4,
- la figure 9 est une vue en perspective de l'appareil illustré sur les figures 1, 4 et 8, dans laquelle le couvercle principal a été retiré.

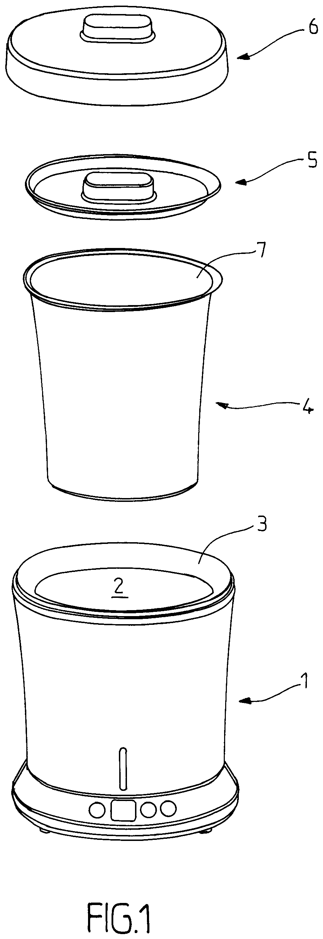

L'appareil pour la réalisation de préparations fermentées à base de lait, notamment de préparations fermentées liquides, illustré sur les figures 1 à 9 comporte un boîtier principal 1 définissant une cavité 2 présentant une ouverture supérieure 3, une cuve 4 amovible insérée au moins partiellement dans la cavité 2, un couvercle intérieur 5 associé à la cuve 4, et un couvercle principal 6 associé au boîtier principal 1. La cuve 4 présente avantageusement une géométrie allongée prévue pour le rangement dans la porte d'un réfrigérateur. La hauteur de la cuve 4 est de préférence supérieure à la plus grande largeur de la cuve 4. La cuve 4 présente par exemple une capacité utile d'environ 1,7 litre. La cuve 4 et le couvercle intérieur 5 forment une enceinte de préparation confinée pour contenir le lait et les ferments.

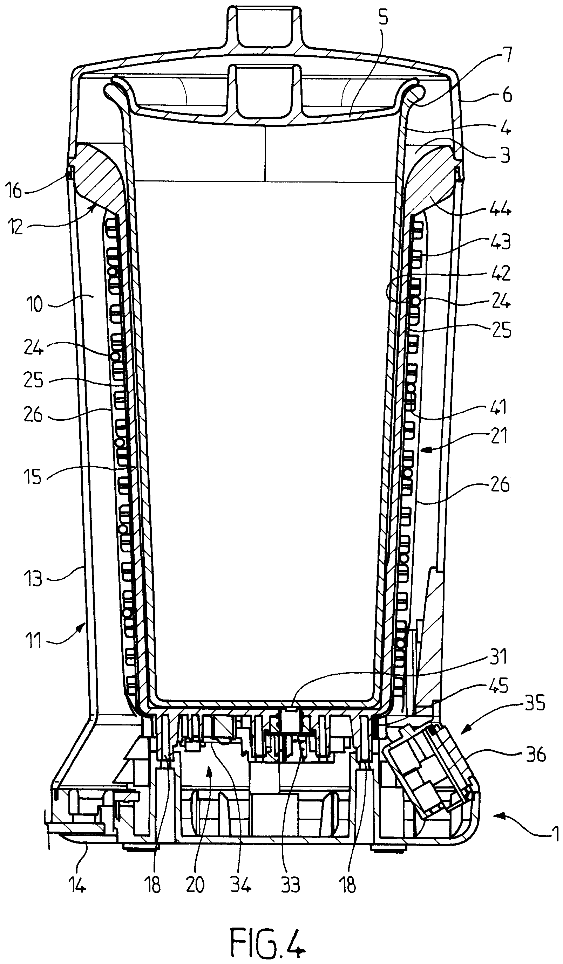

Plus particulièrement dans l'exemple de réalisation illustré sur les figures, la cuve 4 présente une partie supérieure évasée 7, tel que bien visible sur les figures 1, 4 et 9. Le couvercle intérieur 5 est engagé à l'intérieur de la partie supérieure évasée 7, tel que visible sur la figure 4. Le couvercle intérieur 5 ferme ainsi la cuve 4 de manière sensiblement étanche.

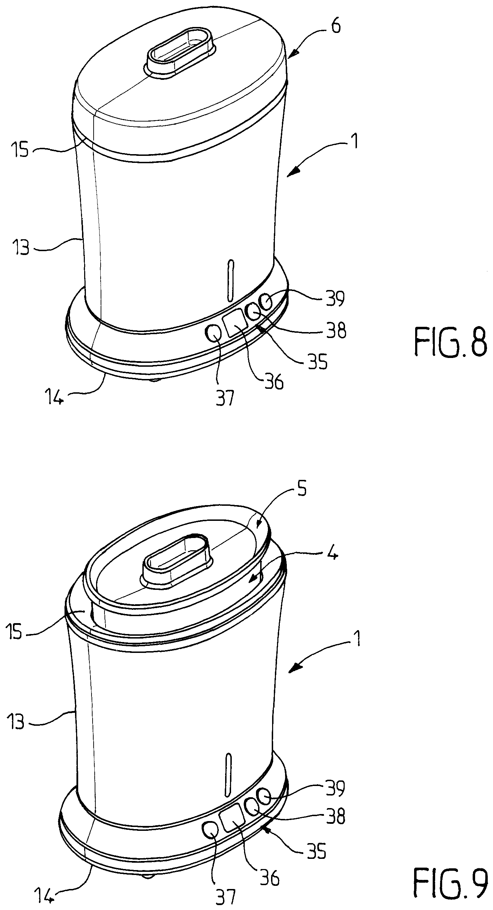

La cuve 4 en place dans la cavité 2 dépasse du boîtier principal 1, tel que visible sur la figure 9. Le couvercle principal 6 présente une bordure annulaire inférieure 8 entourant la partie supérieure de la cuve 4, tel que visible sur la figure 4.

Tel que mieux visible sur la figure 4, le boîtier principal 1 présente une enveloppe externe 11 et une paroi interne 12 définissant une chambre intérieure 10. Le boîtier principal 1 est ainsi un boîtier à double paroi. La chambre intérieure 10 s'étend autour et en dessous de la cavité 2. L'enveloppe externe 11 est fermée par le couvercle principal 6. La paroi interne 12 s'étend sous le couvercle principal 6 et forme la cavité 2.

Plus particulièrement dans l'exemple de réalisation illustré sur les figures, le boîtier principal 1 comporte un corps extérieur tubulaire 13 reposant sur une base 14. Le corps extérieur tubulaire 13 porte un corps intérieur 15. Le corps intérieur 15 repose sur une bordure supérieure 16 du corps extérieur tubulaire 13. Le couvercle principal 6 repose sur le corps intérieur 15 autour de la cavité 2. Le corps extérieur tubulaire 13, la base 14, et la partie périphérique du corps intérieur 15 définissent l'enveloppe externe 11. La partie centrale du corps intérieur 15 définit la paroi interne 12. La base 14 est assemblée avec le corps extérieur tubulaire 13 et avec le corps intérieur 15, par exemple au moyen de vis montées dans des logements de vis 17, 18 issus du corps extérieur tubulaire 13 ou du corps intérieur 15. Notamment les logements de vis 18 issus du corps intérieur 15 reposent sur des cheminées 19 issues de la base 14. La chambre intérieure 10 est ainsi traversée par plusieurs piliers formés par les logements de vis 18 et les cheminées 19.

Le corps intérieur 15, le corps extérieur tubulaire 13 et la base 14 sont avantageusement réalisés en matière plastique, notamment en thermoplastique. Le corps intérieur 15, le corps extérieur tubulaire 13 et la base 14 sont par exemple réalisés en polypropylène.

La cuve 4, le couvercle intérieur 5 et le couvercle externe 6 sont avantageusement réalisés en matière plastique, notamment en matière plastique transparente. La cuve 4 est par exemple réalisée en Tritan™, le couvercle intérieur 5 et le couvercle externe 6 étant par exemple réalisés en SAN.

Tel que mieux visible sur la figure 4, la chambre intérieure 10 loge un dispositif de chauffe 20. Le boîtier principal 1 à double paroi formant la chambre intérieure 10 définit avec le couvercle principal 6 une enceinte de chauffe confinée favorisant l'obtention d'une température homogène dans la cavité 2. Le dispositif de chauffe 20 comprend des moyens de chauffe latéraux 21 et des moyens de chauffe inférieurs 22.

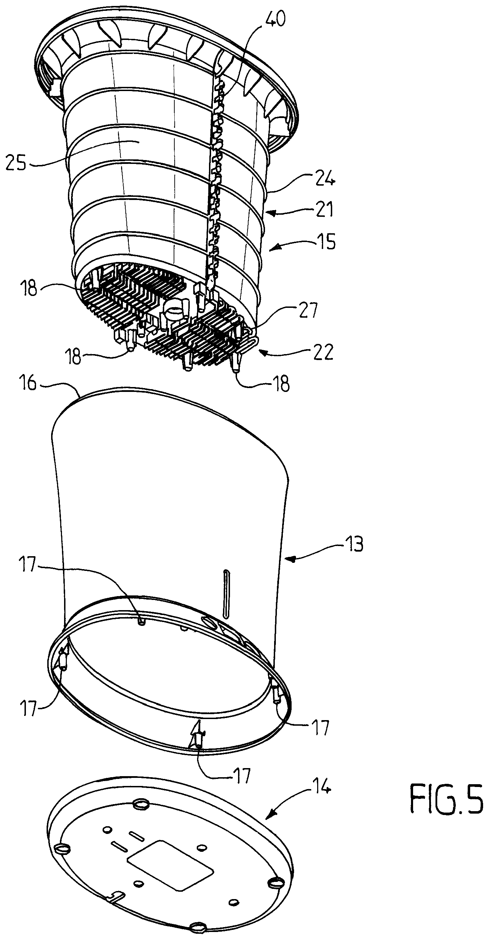

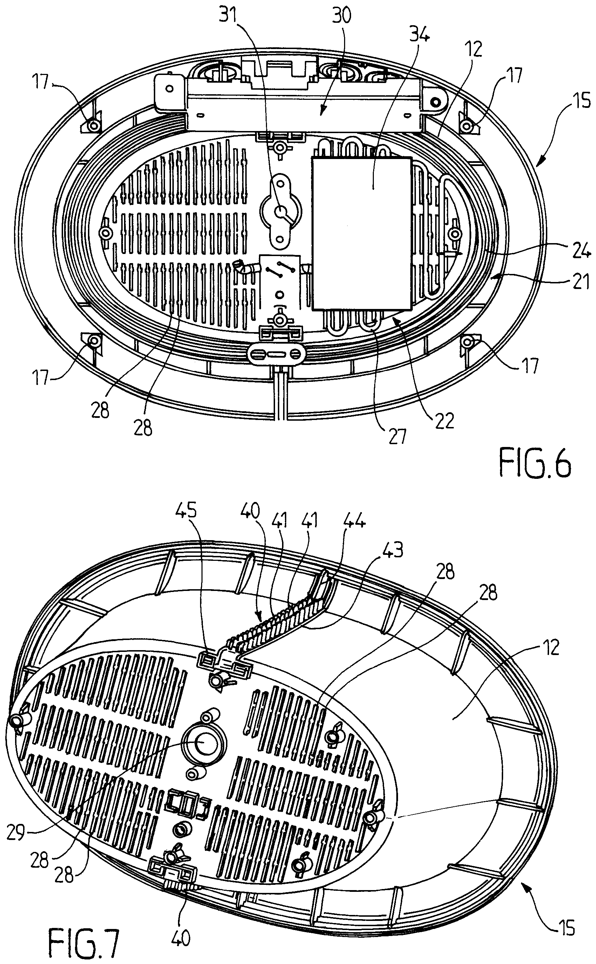

Les moyens de chauffe latéraux 21 sont portés par la paroi interne 12 et entourent la cavité 2. Dans l'exemple de réalisation illustré sur les figures, les moyens de chauffe latéraux 21 comprennent au moins un fil chauffant latéral 24 disposé dans la chambre intérieure 10 à l'extérieur de la paroi interne 12. Tel que mieux visible sur la figure 5, le fil chauffant latéral 24 est enroulé en spirale autour de la paroi interne 12. Les spirales du fil chauffant latéral 24 sont non jointives. De manière préférée, pour obtenir une bonne homogénéité de chauffe, le fil chauffant latéral 24 est enroulé en spirale sur plusieurs tours autour de la paroi interne 12, de préférence sur au moins 3 tours. Avantageusement alors, la paroi interne 12 présente au moins une série de conformations 41 définissant des logements 42 pour positionner le fil chauffant latéral 24. De préférence, les logements 42 sont espacés à intervalles réguliers. Dans l'exemple de réalisation illustré sur les figures, la paroi interne 12 présente deux séries de conformations 41 disposées de manière opposée. Chaque série de conformations 41 appartient à un élément de montage 40 rapporté à l'extérieur de la paroi interne 12. Les éléments de montage 40 s'étendent selon une direction principalement verticale, et de préférence verticale ou sensiblement verticale. Tel que mieux visible sur la figure 7, chaque élément de montage 40 est inséré dans une glissière 43 formée sur la face latérale externe de la paroi interne 12. Une extrémité de chaque élément de montage 40 est maintenue par une nervure 44 issue de la paroi interne 12, l'autre extrémité de chaque élément de montage 40 étant engagée dans une conformation concave 45 de la paroi interne 12.

Les moyens de chauffe latéraux 21 comprennent une membrane de diffusion de chaleur 25 disposée autour de la paroi interne 12. La membrane de diffusion de chaleur 25 est par exemple formée par une ou plusieurs feuilles d'aluminium autocollantes entourant la face latérale externe du corps intérieur 15. Si désiré la membrane de diffusion de chaleur 25 peut être réalisée en plusieurs parties, non nécessairement jointives. La figure 6 illustre une forme de réalisation de la membrane de diffusion de chaleur 25 comportant plusieurs feuilles d'aluminium autocollantes disposées selon une orientation principalement verticale, avec de préférence un recouvrement entre deux feuilles d'aluminium autocollantes adjacentes. La membrane de diffusion de chaleur 25 est interposée entre la paroi interne 12 et le fil chauffant latéral 24. La membrane de diffusion de chaleur 25 est agencée entre la paroi interne 12 et chaque élément de montage 40. A titre de variante, la membrane de diffusion de chaleur 25 peut s'étendre entre les éléments de montage 40 en s'interrompant au niveau d'au moins un des éléments de montage 40.

Les moyens de chauffe latéraux 21 sont ainsi formés par des moyens de chauffe latéraux surfaciques permettant une meilleure homogénéité de chauffe de la cavité 2, de la cuve 4 et du contenu de la cuve 4.

Les moyens de chauffe latéraux 21 comprennent une autre membrane de diffusion de chaleur 26, représentée uniquement sur la figure 4, disposée autour de la membrane de diffusion de chaleur 25. Le fil chauffant latéral 24 est disposé entre la membrane de diffusion de chaleur 25 et l'autre membrane de diffusion de chaleur 26. L'autre membrane de diffusion de chaleur 26 peut être aussi formée par une ou plusieurs feuilles d'aluminium autocollantes disposées sur le fil chauffant latéral 24 et la membrane de diffusion de chaleur 25, pour entourer la face latérale externe du corps intérieur 15. L'autre membrane de diffusion de chaleur 26 recouvre les conformations 41 du ou des éléments de montage 40. La membrane de diffusion de chaleur 25 et l'autre membrane de diffusion de chaleur 26 sont de préférence liées entre elles.

Dans l'exemple de réalisation illustré, le fil chauffant latéral 24 présente une puissance de l'ordre de 10 W par mètre, des valeurs supérieures ou inférieures peuvent toutefois être envisagées. Si désiré plusieurs fils chauffants latéraux 24 peuvent être disposés autour de la paroi interne 12.

Les moyens de chauffe inférieurs 22 sont distincts des moyens de chauffe latéraux 21. Les moyens de chauffe inférieurs 22 sont disposés sous le fond de la cavité 2. De préférence, les moyens de chauffe inférieurs 22 sont portés par la paroi interne 12. Dans l'exemple de réalisation illustré sur les figures, les moyens de chauffe inférieurs 22 comprennent au moins un fil chauffant inférieur 27 porté par la paroi interne 12. A cet effet, la paroi interne 12 présente des nervures inférieures 28 entre lesquelles est monté le fil chauffant inférieur 27. Les nervures inférieures 28 permettent de retenir le fil chauffant inférieur 27 et aussi de diffuser la chaleur du fil chauffant inférieur 27 au fond de la paroi interne 12. Plus particulièrement dans l'exemple illustré sur les figures, le fil chauffant inférieur 27 est monté en zigzag sous la paroi interne 12, tel que visible sur les figures 4 et 6. Les nervures inférieures 28 sont réparties de part et d'autre de la partie centrale du fond de la paroi interne 12. Pour mieux visualiser les nervures inférieures 28 sur les figures 4 et 6, le fil chauffant inférieur 27 est représenté seulement d'un côté de la partie centrale du fond de la paroi interne 12. Le fil chauffant inférieur 27 s'étend également de l'autre coté de la partie centrale du fond de la paroi interne 12 entre les nervures inférieures 28, même s'il n'est pas représenté sur les figures 4 et 6.

Dans l'exemple de réalisation illustré, le fil chauffant inférieur 27 présente une puissance de l'ordre de 10 W par mètre, des valeurs supérieures ou inférieures peuvent toutefois être envisagées. Si désiré plusieurs fils chauffants inférieurs 27 peuvent être disposés sous la paroi interne 12.

Si désiré, un même fil chauffant peut être utilisé pour réaliser le fil chauffant latéral 24 (ou l'un des fils chauffants latéraux 24) et le fil chauffant inférieur 27 (ou l'un des fils chauffants inférieurs 27).

La puissance du dispositif de chauffe 20 est de préférence inférieure ou égale à 300W. La puissance des moyens de chauffe inférieurs 22 rapportée à la surface inférieure du fond de la paroi interne 12 est supérieure à la puissance des moyens de chauffe latéraux 21 rapportée à la surface latérale externe de la paroi interne 12 entourée par les moyens de chauffe latéraux 21, et de préférence au moins deux fois supérieure à la puissance des moyens de chauffe latéraux 21 rapportée à ladite surface latérale externe. Le ou les éléments de montage 40 ne sont pas pris en compte dans le calcul de la surface latérale externe de la paroi interne 12. Les nervures inférieures 28 n'entrent pas dans le calcul de la surface inférieure du fond de la paroi interne 12. La surface inférieure du fond de la paroi interne 12 correspond à l'encombrement géométrique du fond de la cavité 2. La puissance des moyens de chauffe latéraux 21 est de préférence supérieure à la puissance des moyens de chauffe inférieurs 22, et de manière préférée au moins 1,5 fois supérieure à la puissance des moyens de chauffe inférieurs 22.

Dans l'exemple de réalisation illustré sur les figures, la puissance du dispositif de chauffe 20 est de l'ordre de 40 W, la puissance des moyens de chauffe latéraux 21 étant de l'ordre de 28 W, la puissance des moyens de chauffe inférieurs 22 étant de l'ordre de 12 W. La surface extérieure de la partie latérale de la paroi interne 12 étant de l'ordre de 730 cm², la puissance surfacique des moyens de chauffe latéraux 21 est de 0,04 W/cm² environ. La surface extérieure du fond de la paroi interne 12 étant de l'ordre de 91 cm², la puissance surfacique des moyens de chauffe inférieurs 22 est de 0,13 W/cm² environ.

Dans l'exemple de réalisation illustré sur les figures, le fond de la cuve 4 repose sur le fond de la cavité 2, tel que visible sur la figure 4. Cette disposition permet d'obtenir un meilleur transfert thermique des moyens de chauffe inférieurs 22 vers la cuve 4, plus rapide et plus homogène. Par ailleurs la distance entre la paroi latérale de la cuve 4 et la paroi latérale de la cavité 2 est de l'ordre de 1 mm dans la partie médiane de la cuve 4, et de préférence inférieure à 1 mm dans la partie inférieure de la cuve 4, pour assurer un bon transfert thermique entre les moyens de chauffe latéraux 21 et la cuve 4 par la paroi interne 12.

L'appareil pour la réalisation de préparations fermentées à base de lait selon l'invention comporte un dispositif de commande 30 comprenant un capteur de température 31 pour piloter le fonctionnement du dispositif de chauffe 20. Le capteur de température 31 est agencé en dessous du fond de la cuve 4 et à distance des moyens de chauffe inférieurs 22.

Le capteur de température 31 est par exemple un capteur de température de type CTN. Le capteur de température 31 est avantageusement porté par la paroi interne 12. Le capteur de température 31 peut être agencé au moins partiellement dans la chambre intérieure 10.

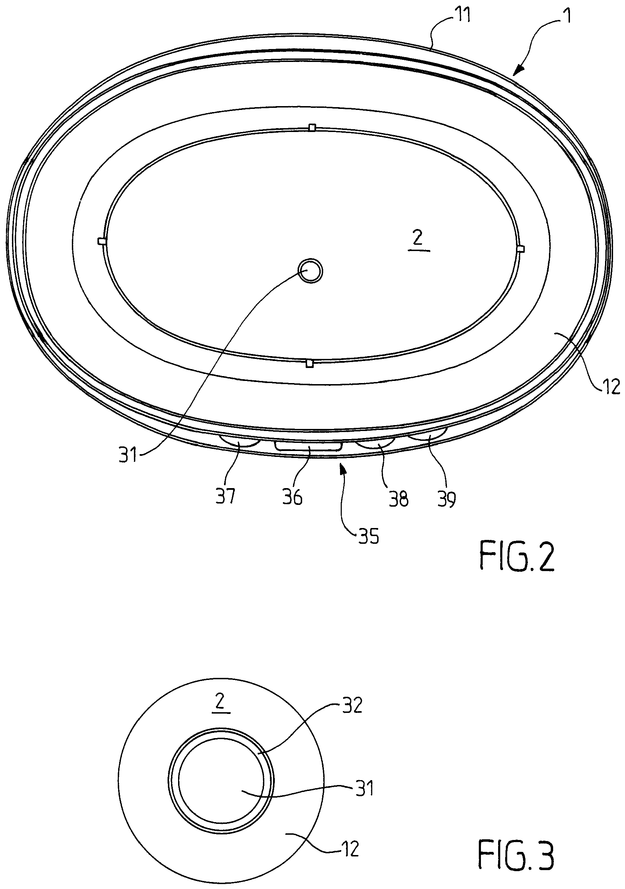

Dans l'exemple de réalisation illustré sur les figures, le capteur de température 31 est agencé en position centrale sous le fond de la paroi interne 12. Le capteur de température 31 est agencé entre les deux groupes de nervures inférieures 28. Le capteur de température 31 est ainsi agencé à distance du fil chauffant inférieur 27. Le capteur de température 31 débouche dans la cavité 2. Le capteur de température 31 traverse la paroi interne 12, tel que visible sur la figure 4. La paroi interne 12 présente à cet effet un passage 29 visible sur la figure 7, pour le capteur de température 31, non représenté. Tel que mieux visible sur la figure 3, un joint d'étanchéité 32 est monté entre le capteur de température 31 et la paroi interne 12. Le capteur de température 31 est en contact avec le fond de la cuve 4 disposée dans la cavité 2, tel que visible sur la figure 4. Le capteur de température 31 est alors de préférence monté mobile contre un élément de rappel élastique 33. La cuve 4 en place dans la cavité 2 repousse ainsi le capteur de température 31 contre l'élément de rappel élastique 33. Tel que représenté sur la figure 4, l'élément de rappel élastique 33 est par exemple un ressort hélicoïdal. A titre de variante, d'autres types d'éléments de rappel élastique peuvent être utilisés, notamment une languette flexible.

A titre de variante, le capteur de température 31 peut déboucher dans la cavité 2 sans nécessairement être en contact avec la cuve 4 et/ou être monté mobile contre un élément de rappel élastique 33. Le capteur de température 31 peut alors de préférence être monté affleurant avec le fond de la cavité 2 ou un peu en retrait par rapport au fond de la cavité 2.

A titre de variante, le capteur de température 31 peut aussi être entièrement agencé dans la chambre intérieure 10, sans déboucher dans la cavité 2. Le capteur de température 31 agencé en dessous du fond de la cuve 4 et à distance des moyens de chauffe inférieurs 22 mesure alors la température ambiante dans la chambre intérieure 10. La puissance peu élevée du dispositif de chauffe 20 permet d'envisager une régulation de température en fonction de mesures de la température ambiante dans la chambre intérieure 10 et/ou de température de parois de la chambre intérieure 10.

Le dispositif de commande 30 comporte un circuit de commande 34, visible sur la figure 4, pour commander l'alimentation du dispositif de chauffe 20. Le capteur de température 31 est relié au circuit de commande 34. Plus particulièrement dans l'exemple de réalisation illustré sur les figures, le circuit de commande 34 est porté par la paroi interne 12. Du fait de la faible puissance des moyens de chauffe inférieurs 22, le circuit de commande 34 peut être monté sous la paroi interne 12. Le circuit de commande 34 repose sur les nervures inférieures 28. Le circuit de commande 34 peut notamment comprendre un microprocesseur. Si désiré, le circuit de commande 34 peut porter le capteur de température 31, notamment lorsque le capteur de température 31 est entièrement agencé dans la chambre intérieure 10, sans déboucher dans la cavité 2. Le capteur de température 31 est alors avantageusement placé sous le circuit de commande 34, pour limiter l'exposition du capteur de température 31 au rayonnement des moyens de chauffe inférieurs 22.

Dans l'exemple de réalisation illustré sur les figures, le dispositif de commande 30 comporte un panneau de commande 35 pour sélectionner un mode de chauffe parmi au moins deux modes de chauffe. Plus particulièrement dans l'exemple de réalisation illustré sur les figures, le panneau de commande 35 est porté par le corps extérieur tubulaire 13. Le panneau de commande 35 comprend un afficheur 36, par exemple un afficheur LCD, un premier bouton de commande 37 pour sélectionner un mode de chauffe, un deuxième bouton de commande 38 pour diminuer le temps de chauffe, et un troisième bouton de commande 39 pour augmenter le temps de chauffe.

Un premier mode de chauffe est par exemple prévu pour réaliser des préparations fermentées à base de lait telles que notamment des yaourts, des yaourts à boire, de l'Ayran ou du Laban. Le capteur de température 31 associé au circuit de commande 34 et au dispositif de chauffe 20 permet d'obtenir une température de l'ordre de 43°C dans la préparation contenue dans la cuve 4 fermée par le couvercle intérieur 5 et placée dans la cavité 2 fermée par le couvercle principal 6. Le temps de chauffe préprogrammé est de 6 heures.

Un deuxième mode de chauffe est par exemple prévu pour réaliser des préparations fermentées à base de lait telles que notamment du Kéfir ou du Leben. Le capteur de température 31 associé au circuit de commande 34 et au dispositif de chauffe 20 permet d'obtenir une température comprise entre 25°C et 30°C dans la préparation contenue dans la cuve 4 fermée par le couvercle intérieur 5 et placée dans la cavité 2 fermée par le couvercle principal 6. Le temps de chauffe préprogrammé est de 12 heures.

Le premier et/ou le deuxième mode de chauffe peut notamment utiliser une régulation classique par seuil de température haut et seuil de température bas consistant à alimenter le dispositif de chauffe 20 jusqu'à la détection du seuil de température haut, à interrompre alors l'alimentation du dispositif de chauffe 20 jusqu'à la détection du seuil de température bas, pour alimenter à nouveau le dispositif de chauffe 20 jusqu'à la détection du seuil de température haut, et ainsi de suite jusqu'à atteindre le temps de chauffe préprogrammé.

Si désiré l'un au moins des modes de chauffe peut mettre en oeuvre une première phase de chauffe à puissance fixe obtenue par alternance de périodes de chauffe et de périodes d'arrêt, avant une deuxième phase de chauffe à puissance variable obtenue en utilisant le capteur de température 31 pour réguler l'alimentation du dispositif de chauffe 20.

Si désiré l'un au moins des modes de chauffe peut mettre en oeuvre une détection de la température ambiante lors de la mise en fonctionnement de l'appareil, par exemple pour ajuster la puissance de chauffe au début de la chauffe en utilisant une succession de périodes de chauffe et de périodes d'arrêt.

L'appareil selon l'invention s'utilise et fonctionne de la manière suivante.

L'utilisateur place la cuve 4 dans la cavité 2 et verse la quantité souhaitée de lait, par exemple 1,5 litre, dans la cuve 4, ajoute le ferment approprié, et remue la préparation pour bien mélanger le lait et le ferment. L'utilisateur ferme ensuite la cuve 4 avec le couvercle intérieur 5, puis le boîtier principal 1 avec le couvercle principal 6. L'utilisateur sélectionne le mode de chauffe souhaité avec le premier bouton de commande 37, puis ajuste si désiré le temps de chauffe avec le deuxième bouton de commande 38 et/ou le troisième bouton de commande 39. Pendant la chauffe, le boîtier principal 1 à double paroi permet d'obtenir une chaleur homogène dans la cavité 2 sous l'action combinée des moyens de chauffe latéraux 21 et des moyens de chauffe inférieurs 22. La double enceinte formée d'une part par le boîtier principal 1 fermé par le couvercle principal 6 et d'autre part par la cuve 4 fermée par le couvercle intérieur 5 permet d'obtenir une température homogène dans la cuve 4 fermée par le couvercle intérieur 5. Le capteur de température 31 en contact avec la cuve 4 permet de contrôler précisément la chauffe même lorsque la température de consigne est proche de la température de la cuve 4. Une chauffe homogène de la cuve 4 et de la préparation contenue dans la cuve 4 peut ainsi être obtenue, sans surchauffe néfaste pour la qualité de la préparation.

A titre de variante, la cuve 4 peut être insérée complètement dans la cavité 2.

A titre de variante, les moyens de chauffe latéraux 21 et/ou les moyens de chauffe inférieurs 22 peuvent notamment comprendre un film souple chauffant ou un autocollant chauffant présentant des pistes chauffantes résistives, par exemple sérigraphiées. D'autres types de moyens de chauffe latéraux surfaciques et/ou d'autres types de moyens de chauffe inférieurs surfaciques peuvent ainsi être obtenus.

A titre de variante, l'enveloppe externe 11 et la paroi interne 12 du boîtier principal 1 ne sont pas nécessairement définies par le corps extérieur tubulaire 13, la base 14, et le corps intérieur 15. Notamment le corps intérieur 15 peut être prolongé vers l'extérieur pour former une partie plus importante de l'enveloppe externe 11.

La présente invention n'est nullement limitée à l'exemple de réalisation décrit et à ses variantes, mais englobe de nombreuses modifications dans le cadre des revendications.

## Revendications

1. Appareil pour la réalisation de préparations fermentées à base de lait, notamment de préparations fermentées liquides, comportant un boîtier principal (1) définissant une cavité (2) présentant une ouverture supérieure (3), une cuve (4) amovible insérée au moins partiellement dans la cavité (2), un couvercle intérieur (5) associé à la cuve (4), un couvercle principal (6) associé au boîtier principal (1), le boîtier principal (1) présentant une enveloppe externe (11) et une paroi interne (12) définissant une chambre intérieure (10) logeant un dispositif de chauffe (20) comprenant des moyens de chauffe latéraux (21) portés par la paroi interne (12) et entourant la cavité (2), **caractérisé en ce que** le dispositif de chauffe (20) comprend des moyens de chauffe inférieurs (22) distincts des moyens de chauffe latéraux (21), les moyens de chauffe inférieurs (22) étant disposés sous le fond de la cavité (2), et **en ce que** l'appareil comporte un dispositif de commande (30) comprenant un capteur de température (31) agencé en dessous du fond de la cuve (4) et à distance des moyens de chauffe inférieurs (22), pour piloter le fonctionnement du dispositif de chauffe (20).

2. Appareil pour la réalisation de préparations fermentées à base de lait selon la revendication 1, **caractérisé en ce que** le capteur de température (31) débouche dans la cavité (2).

3. Appareil pour la réalisation de préparations fermentées à base de lait selon l'une des revendications 1 ou 2, **caractérisé en ce que** la puissance des moyens de chauffe inférieurs (22) rapportée à la surface inférieure du fond de la paroi interne (12) est supérieure à la puissance des moyens de chauffe latéraux (21) rapportée à la surface latérale externe de la paroi interne (12) entourée par les moyens de chauffe latéraux (21), et de préférence au moins deux fois supérieure à la puissance des moyens de chauffe latéraux (21) rapportée à ladite surface latérale externe.

4. Appareil pour la réalisation de préparations fermentées à base de lait selon l'une des revendications 1 à 3, **caractérisé en ce que** la puissance des moyens de chauffe latéraux (21) est supérieure à la puissance des moyens de chauffe inférieurs (22), et de manière préférée au moins 1,5 fois supérieure à la puissance des moyens de chauffe inférieurs (22).

5. Appareil pour la réalisation de préparations fermentées à base de lait selon l'une des revendications 1 à 4, **caractérisé en ce que** le fond de la cuve (4) repose sur le fond de la cavité (2).

6. Appareil pour la réalisation de préparations fermentées à base de lait selon l'une des revendications 1 à 5, **caractérisé en ce que** le capteur de température (31) est en contact avec le fond de la cuve (4).

7. Appareil pour la réalisation de préparations fermentées à base de lait selon l'une des revendications 1 à 6, **caractérisé en ce que** le capteur de température (31) est monté mobile contre un élément de rappel élastique (33).

8. Appareil pour la réalisation de préparations fermentées à base de lait selon l'une des revendications 1 à 7, **caractérisé en ce que** le capteur de température (31) traverse la paroi interne (12) et **en ce qu'**un joint d'étanchéité (32) est monté entre le capteur de température (31) et la paroi interne (12).

9. Appareil pour la réalisation de préparations fermentées à base de lait selon l'une des revendications 1 à 8, **caractérisé en ce que** les moyens de chauffe latéraux (21) sont formés par des moyens de chauffe latéraux surfaciques.

10. Appareil pour la réalisation de préparations fermentées à base de lait selon l'une des revendications 1 à 9, **caractérisé en ce que** les moyens de chauffe latéraux (21) comprennent au moins un fil chauffant latéral (24) enroulé en spirale autour de la paroi interne (12).

11. Appareil pour la réalisation de préparations fermentées à base de lait selon l'une des revendications 1 à 10, **caractérisé en ce que** les moyens de chauffe latéraux (21) comprennent une membrane de diffusion de chaleur (25) disposée autour de la paroi interne (12).

12. Appareil pour la réalisation de préparations fermentées à base de lait selon la revendication 10 et la revendication 11, **caractérisé en ce que** la membrane de diffusion de chaleur (25) est agencée entre la paroi interne (12) et le fil chauffant latéral (24).

13. Appareil pour la réalisation de préparations fermentées à base de lait selon la revendication 12, **caractérisé en ce que** les moyens de chauffe latéraux comprennent une autre membrane de diffusion de chaleur (26), le fil chauffant latéral (24) étant disposé entre la membrane de diffusion de chaleur (25) et l'autre membrane de diffusion de chaleur (26).

14. Appareil pour la réalisation de préparations fermentées à base de lait selon l'une des revendications 1 à 13, **caractérisé en ce que** les moyens de chauffe inférieurs (22) comprennent au moins un fil chauffant inférieur (27) porté par la paroi interne (12).

15. Appareil pour la réalisation de préparations fermentées à base de lait selon la revendication 14, **caractérisé en ce que** la paroi interne (12) présente des nervures inférieures (28) entre lesquelles est monté le fil chauffant inférieur (27).

16. Appareil pour la réalisation de préparations fermentées à base de lait selon l'une des revendications 14 ou 15, **caractérisé en ce que** le fil chauffant inférieur (27) est monté en zigzag sous la paroi interne (12).

17. Appareil pour la réalisation de préparations fermentées à base de lait selon l'une des revendications 1 à 16, **caractérisé en ce que** la cuve (4) présente une partie supérieure évasée (7) et **en ce que** le couvercle intérieur (5) est engagé à l'intérieur de la partie supérieure évasée (7).

18. Appareil pour la réalisation de préparations fermentées à base de lait selon l'une des revendications 1 à 17, **caractérisé en ce que** le dispositif de commande (30) comporte un panneau de commande (35) pour sélectionner un mode de chauffe parmi au moins deux modes de chauffe.

19. Appareil pour la réalisation de préparations fermentées à base de lait selon l'une des revendications 1 à 18, **caractérisé en ce que** le boîtier principal (1) comporte un corps extérieur tubulaire (13) reposant sur une base (14) et portant un corps intérieur (15) définissant la paroi interne (12).

20. Appareil pour la réalisation de préparations fermentées à base de lait selon la revendication 18 et la revendication 19, **caractérisé en ce que** le panneau de commande (35) est porté par le corps extérieur tubulaire (13).

21. Appareil pour la réalisation de préparations fermentées à base de lait selon l'une des revendications 1 à 20, **caractérisé en ce que** le dispositif de commande (30) comporte un circuit de commande (34) porté par la paroi interne (12).

## Patentansprüche

1. Vorrichtung zur Herstellung von fermentierten Zubereitungen auf Basis von Milch, insbesondere flüssige, fermentierte Zubereitungen, umfassend ein Hauptgehäuse (1), das einen Hohlraum (2) definiert, der eine obere Öffnung (3) aufweist, einen Behälter (4), der zumindest teilweise in den Hohlraum (2) entnehmbar eingefügt ist, einen inneren Deckel (5), der mit dem Behälter (4) verbunden ist, eine Hauptabdeckung (6), die mit dem Hauptgehäuse (1) verbunden ist, wobei das Hauptgehäuse (1) eine äußere Hülle (11) und eine innere Wand (12) aufweist, die eine innere Kammer (10) definiert, in der eine Heizeinrichtung (20) untergebracht ist, die seitliche Heizmittel (21) umfasst, die von der inneren Wand (12) getragen werden und den Hohlraum (2) umgeben, **dadurch gekennzeichnet, dass** die Heizvorrichtung (20) untere Heizmittel (22) umfasst, die von den seitlichen Heizmitteln (21) getrennt sind, wobei die unteren Heizmittel (22) unter dem Boden des Hohlraums (2) angeordnet sind, und dass die Vorrichtung eine Steuervorrichtung (30) aufweist, die einen Temperatursensor (31) umfasst, der unter dem Boden des Behälters (4) und entfrnt von den unteren Heizmitteln (22) angeordnet ist, um den Betrieb der Heizvorrichtung (20) zu steuern.

2. Vorrichtung zur Herstellung von fermentierten Zubereitungen auf Basis von Milch nach Anspruch 1, **dadurch gekennzeichnet, dass** der Temperatursensor (31) in den Hohlraum (2) mündet.

3. Vorrichtung zur Herstellung von fermentierten Zubereitungen auf Basis von Milch nach einem der Ansprüche 1 oder 2, **dadurch gekennzeichnet, dass** die Leistung der unteren Heizmittel (22), die an die untere Fläche des Bodens der Innenwand (12) angestückelt sind, größer als die Leistung der seitlichen Heizmittel (21), die an der äußeren Seitenfläche der inneren Wand (12) angestückelt sind, die von den seitlichen Heizmitteln (21) umgeben ist, und vorzugsweise mindestens der doppelten Leistung der seitlichen Heizmittel (21) ist, die an der äußeren Seitenfläche angestückelt sind.

4. Vorrichtung zur Herstellung von fermentierten Zubereitungen auf Basis von Milch nach einem der Ansprüche 1 bis 3, **dadurch gekennzeichnet, dass** die Leistung der seitlichen Heizmittel (21) größer ist als die Leistung der unteren Heizmittel (22), und vorzugsweise mindestens das 1,5-fache der Leistung der unteren Heizmittel (22).

5. Vorrichtung zur Herstellung von fermentierten Zubereitungen auf Basis von Milch nach einem der Ansprüche 1 bis 4, **dadurch gekennzeichnet, dass** der Boden des Behälters (4) auf dem Boden der Kavität (2) ruht.

6. Vorrichtung zur Herstellung von fermentierten Zubereitungen auf Basis von Milch nach einem der Ansprüche 1 bis 5, **dadurch gekennzeichnet, dass** der Temperatursensor (31) mit dem Boden des Behälters (4) in Kontakt ist.

7. Vorrichtung zur Herstellung von fermentierten Zubereitungen auf Basis von Milch nach einem der Ansprüche 1 bis 6, **dadurch gekennzeichnet, dass** der Temperatursensor (31) gegen ein elastisches Rückstellelement (33) beweglich gelagert ist.

8. Vorrichtung zur Herstellung von fermentierten Zubereitungen auf Basis von Milch nach einem der Ansprüche 1 bis 7, **dadurch gekennzeichnet, dass** der Temperatursensor (31) durch die innere Wand (12) geht, und dass eine Dichtung (32) zwischen dem Temperatursensor (31) und der inneren Wand (12) angebracht ist.

9. Vorrichtung zur Herstellung von fermentierten Zubereitungen auf Basis von Milch nach einem der Ansprüche 1 bis 8, **dadurch gekennzeichnet, dass** die seitlichen Heizmittel (21) durch seitliche Oberflächenheizmittel gebildet sind.

10. Vorrichtung zur Herstellung von fermentierten Zubereitungen auf Basis von Milch nach einem der Ansprüche 1 bis 9, **dadurch gekennzeichnet, dass** die seitlichen Heizmittel (21) mindestens einen seitlichen Heizdraht (24) umfassen, der spiralförmig um die innere Wand (12) gewickelt ist.

11. Vorrichtung zur Herstellung von fermentierten Zubereitungen auf Basis von Milch nach einem der Ansprüche 1 bis 10, **dadurch gekennzeichnet, dass** die seitlichen Heizmittel (21) eine Membran zur Wärmediffusion (25) umfassen, die um die inneren Wand (12) angebracht ist.

12. Vorrichtung zur Herstellung von fermentierten Zubereitungen auf Basis von Milch nach Anspruch 10 und Anspruch 11, **dadurch gekennzeichnet, dass** die Membran zur Wärmediffusion (25) zwischen der inneren Wand (12) und dem seitlichen Heizdraht (24) angeordnet ist.

13. Vorrichtung zur Herstellung von fermentierten Zubereitungen auf Basis von Milch nach Anspruch 12, **dadurch gekennzeichnet, dass** die seitlichen Heizmittel eine weitere Membran zur Wärmediffusion (26) umfassen, wobei der seitliche Heizdraht (24) zwischen der Membran zur Wärmediffusion (25) und der weiteren Membran zur Wärmediffusion (26) angeordnet ist.

14. Vorrichtung zur Herstellung von fermentierten Zubereitungen auf Basis von Milch nach einem der Ansprüche 1 bis 13, **dadurch gekennzeichnet, dass** die unteren Heizmittel (22) mindestens einen von der Innenwand (12) getragenen unteren Heizdraht (27) umfassen.

15. Vorrichtung zur Herstellung von fermentierten Zubereitungen auf Basis von Milch nach Anspruch 14, **dadurch gekennzeichnet, dass** die innere Wand (12) untere Rippen (28) aufweist, zwischen denen der untere Heizdraht (27) angebracht ist.

16. Vorrichtung zur Herstellung von fermentierten Zubereitungen auf Basis von Milch nach einem der Ansprüche 14 oder 15, **dadurch gekennzeichnet, dass** der untere Heizdraht (27) unter der inneren Wand (12) zickzackförmig angebracht ist.

17. Vorrichtung zur Herstellung von fermentierten Zubereitungen auf Basis von Milch nach einem der Ansprüche 1 bis 16, **dadurch gekennzeichnet, dass** der Behälter (4) ein konisch aufgeweitetes Oberteil (7) aufweist, und dass der innere Deckel (5) in das Innere des aufgeweiteten Oberteils (7) eingreift.

18. Vorrichtung zur Herstellung von fermentierten Zubereitungen auf Basis von Milch nach einem der Ansprüche 1 bis 17, **dadurch gekennzeichnet, dass** die Steuereinrichtung (30) eine Steuertafel (35) umfasst, um einen Heizmodus unter mindestens zwei Heizmodi auszuwählen.

19. Vorrichtung zur Herstellung von fermentierten Zubereitungen auf Basis von Milch nach einem der Ansprüche 1 bis 18, **dadurch gekennzeichnet, dass** das Hauptgehäuse (1) einen äußeren rohrförmigen Körper (13) umfasst, der auf einem Fundament (14) ruht und einen inneren Körper (15) trägt, der die innere Wand (12) definiert.

20. Vorrichtung zur Herstellung von fermentierten Zubereitungen auf Basis von Milch nach Anspruch 18 und Anspruch 19, **dadurch gekennzeichnet, dass** die Steuertafel (35) durch den äußeren röhrenförmigen Körper (13) getragen wird.

21. Vorrichtung zur Herstellung von fermentierten Zubereitungen auf Basis von Milch nach einem der Ansprüche 1 bis 20, **dadurch gekennzeichnet, dass** die Steuereinrichtung (30) eine Steuerschaltung (34) umfasst, die von der inneren Wand (12) getragen wird.

## Claims

1. Appliance for producing milk-based fermented preparations, in particular liquid fermented preparations, comprising a main housing (1) defining a cavity (2) having a top opening (3), a removable vessel (4) at least partially inserted in the cavity (2), an internal lid (5) associated with the vessel (4), a main lid (6) associated with the main housing (1), the main housing (1) having an external casing (11) and an internal wall (12) defining an internal chamber (10) housing a heating device (20) comprising lateral heating means (21) carried by the internal wall (12) and surrounding the cavity (2), **characterised in that** the heating device (20) comprises lower heating means (22) separate from the lateral heating means (21), the lower heating means (22) being arranged under the bottom of the cavity (2), and **in that** the appliance comprises a control device (30) comprising a temperature sensor (31) arranged below the bottom of the vessel (4) and at a distance from the lower heating means (22), for controlling the operation of the heating device (20).

2. Appliance for producing milk-based fermented preparations according to claim 1, **characterised in that** the temperature sensor (31) opens into the cavity (2).

3. Appliance for producing milk-based fermented preparations according to claims 1 or 2, **characterised in that** the power of the lower heating means (22) added to the lower surface of the bottom of the internal wall (12) is greater than the power of the lateral heating means (21) added to the external lateral surface of the internal wall (12) surrounded by the lateral heating means (21), and preferably at least twice the power of the lateral heating means (21) added to said external lateral surface.

4. Appliance for producing milk-based fermented preparations according to claims 1 to 3, **characterised in that** the power of the lateral heating means (21) is greater than the power of the lower heating means (22), and preferably at least 1.5 times greater than the power of the lower heating means (22).

5. Appliance for producing milk-based fermented preparations according to claims 1 to 4, **characterised in that** the bottom of the vessel (4) rests on the bottom of the cavity (2).

6. Appliance for producing milk-based fermented preparations according to claims 1 to 5, **characterised in that** the temperature sensor (31) is in contact with the bottom of the vessel (4).

7. Appliance for producing milk-based fermented preparations according to claims 1 to 6, **characterised in that** the temperature sensor (31) is movably mounted against an elastic return element (33).

8. Appliance for producing milk-based fermented preparations according to claims 1 to 7, **characterised in that** the temperature sensor (31) passes through the internal wall (12) and **in that** a seal (32) is mounted between the temperature sensor (31) and the internal wall (12).

9. Appliance for producing milk-based fermented preparations according to claims 1 to 8, **characterised in that** the lateral heating means (21) are formed by surface lateral heating means.

10. Appliance for producing milk-based fermented preparations according to claims 1 to 9, **characterised in that** the lateral heating means (21) comprise at least one lateral heating wire (24) rolled in a spiral around the internal wall (12).

11. Appliance for producing milk-based fermented preparations according to claims 1 to 10, **characterised in that** the lateral heating means (21) comprise a heat-diffusion membrane (25) arranged around the internal wall (12).

12. Appliance for producing milk-based fermented preparations according to claim 10 and claim 11, **characterised in that** the heat-diffusion membrane (25) is arranged between the internal wall (12) and the and the lateral heating wire (24).

13. Appliance for producing milk-based fermented preparations according to claim 12, **characterised in that** the lateral heating means comprise another heat-diffusion membrane (26), the lateral heating wire (24) being disposed between the heat-diffusion membrane (25) and the other heat-diffusion membrane (26).

14. Appliance for producing milk-based fermented preparations according to one of claims 1 to 13, **characterised in that** the lower heating means (22) comprise at least one lower heating wire (27) carried out the internal wall (12).

15. Appliance for producing milk-based fermented preparations according to claim 14, **characterised in that** the internal wall (12) has lower ribs (28) between which is mounted the lower heating wire (27).

16. Appliance for producing milk-based fermented preparations according to claims 14 or 15, **characterised in that** the lower heating wire (27) is mounted in zigzag fashion under the internal wall (12).

17. Appliance for producing milk-based fermented preparations according to one of claims 1 to 16, **characterised in that** the vessel (4) has a splayed upper part (7) and **in that** the internal lid (5) is engaged inside the splayed upper part (7).

18. Appliance for producing milk-based fermented preparations according to any of claims 1 to 17, **characterised in that** the control device (30) comprises a control panel (35) for selecting a heating mode from at least two heating modes.

19. Appliance for producing milk-based fermented preparations according to any of claims 1 to 18, **characterised in that** the main housing (1) comprises a tubular external body (13) resting on a base (14) and carrying an internal body (15) defining the internal wall (12).

20. Appliance for producing milk-based fermented preparations according to claim 18 and claim 19, **characterised in that** the control panel (35) is carried by the tubular external body (13).

21. Appliance for producing milk-based fermented preparations according to any of claims 1 to 20, **characterised in that** the control device (30) comprises a control circuit (34) carried by the internal wall (12).
